# FASCICULE DE BREVET EUROPEEN

(11) **EP 0 675 582 B1**
(45) Date de publication et mention de la délivrance du brevet: **02.09.1998**
(21) Numéro de dépôt: 95410017.8
(22) Date de dépôt: 17.03.1995
(51) Int. Cl.: H02B 7/06

(54) **Poste électrique semi-enterré à trottoir d'exploitation démontable et verrouillable**
Semi-unterirdische elektrische Station mit demontierbarem und verriegelbarem Fusssteig
Semi-buried substation with dismountable and lockable operation walkway

(30) Priorité: 30.03.1994 FR 9404147
(43) Date de publication de la demande: 04.10.1995
(73) Titulaire: SCHNEIDER ELECTRIC SA, 92100 Boulogne Billancourt (FR)
(72) Inventeur: Tombois, Jean-Marc, F-38050 Grenoble Cedex 09 (FR)
(74) Mandataire: Hecké, Gérard

(56) Documents cités:
- EP-A- 0 209 027
- AEG MITTEILUNGEN, vol. 49, no. 6/7, Juillet 1959 pages 274-277, K. DÖRFER 'Netztransformatorstationen'
- ELEKTRO-TECHNIK, vol. 35, no. 16, 25 Avril 1952 pages 62-63, RUDOLF LEMME 'Neue Bauformen für Netzstationen'

## Description

L'invention est relative à un poste électrique semi-enterré pour l'extérieur, ayant une enveloppe en béton, subdivisée en un premier compartiment enterré formant un vide technique, et un deuxième compartiment en élévation superposé au dessus d'une partie du vide technique pour le logement de l'appareillage électrique à haute tension et/ou à basse tension, l'autre partie du premier compartiment étant recouverte par un trottoir d'exploitation démontable se trouvant en légère surélévation par rapport au niveau du sol.

Le trottoir d'exploitation équipant certains postes électriques préfabriqués connus, est constitué généralement par plusieurs dalles juxtaposées, et supportées du côté de la porte par un rail profilé rapporté et du côté du marche pied sur un épaulement de l'enveloppe. Un loquet de verrouillage est prévu sur le rail profilé pour autoriser un mouvement de retrait à faible course des dalles autorisant leur basculement vers le haut pour le démontage. En position de verrouillage, le loquet empêche le mouvement de retrait, et les dalles restent bloquées sur le marchepied. La présence du loquet complique les opérations de montage et de démontage du plancher d'accès au vide, et le jeu entre les dalles rend le trottoir non étanche.

Un poste électrique comprenant un trottoir selon l'art antérieur est décrit dans le document EP-A-0 209 027.

L'objet de l'invention consiste à réaliser un poste électrique semi-enterré ayant un trottoir d'exploitation facilement démontable et verrouillable.

Le poste selon l'invention est caractérisé en ce que le trottoir comporte un plancher plein d'un seul tenant ayant une poutre de renfort à l'extrémité postérieure, et un ergot de retenue à l'extrémité opposée antérieure, que la poutre est équipée de moyens de fixation coopérant avec des vis d'assemblage pour créer un premier dispositif de verrouillage du trottoir à l'intérieur de l'enveloppe, et que l'ergot de retenue s'engage dans une position active à l'intérieur d'une rainure d'accrochage pour former un deuxième dispositif de verrouillage du trottoir sur la face antérieure externe de l'enveloppe.

La poutre de renfort s'étend parallèlement à la base d'une porte, laquelle autorise l'accès à l'appareillage, et au premier dispositif de verrouillage du trottoir.

Les moyens de fixation comportent deux pattes assujetties symétriquement aux extrémités opposées de la poutre pour venir en engagement avec la paroi interne des faces transversales opposées de l'enveloppe lorsque le premier dispositif de verrouillage est actif.

La structure monobloc du plancher empêche toute infiltration d'eau depuis l'extérieur, ce qui résout les problèmes d'étanchéité. L'assemblage de la poutre et des moyens de fixation à la structure du plancher facilite les opérations de montage et de démontage du trottoir. Le déblocage à l'arrière du premier dispositif de verrouillage n'est possible qu'après ouverture de la porte, et provoque en même temps le déblocage à l'avant du deuxième dispositif de verrouillage après un mouvement de retrait du plancher.

Selon un mode de réalisation, le plancher est formé par une tôle métallique ayant une structure à reliefs procurant un effet antidérapant, et que la poutre est soudée à l'extrémité postérieure de la tôle, en étant équipée d'au moins une nervure d'étanchéité.

Selon une caractéristique de l'invention, le plancher du trottoir présente une légère pente en direction de l'ergot de retenue pour s'opposer à tout écoulement d'eau vers la nervure d'étanchéité.

D'autres avantages ressortiront plus clairement de la description qui va suivre d'un mode de réalisation donné à titre d'exemple non limitatif, et représenté aux dessins annexés dans lesquels :

La figure 1 est une vue schématique en perspective du poste électrique équipé du trottoir démontable selon l'invention.

La figure 2 montre une vue en coupe selon la ligne 2-2 de la figure 1.

La figure 3 est représente une vue en plan du plancher constitutif du trottoir.

La figure 4 représente une vue en coupe selon la ligne 4-4 de la figure 3.

Les figures 5 et 6 sont des vues schématiques en coupe du trottoir respectivement en position verrouillée, et en position déverrouillée.

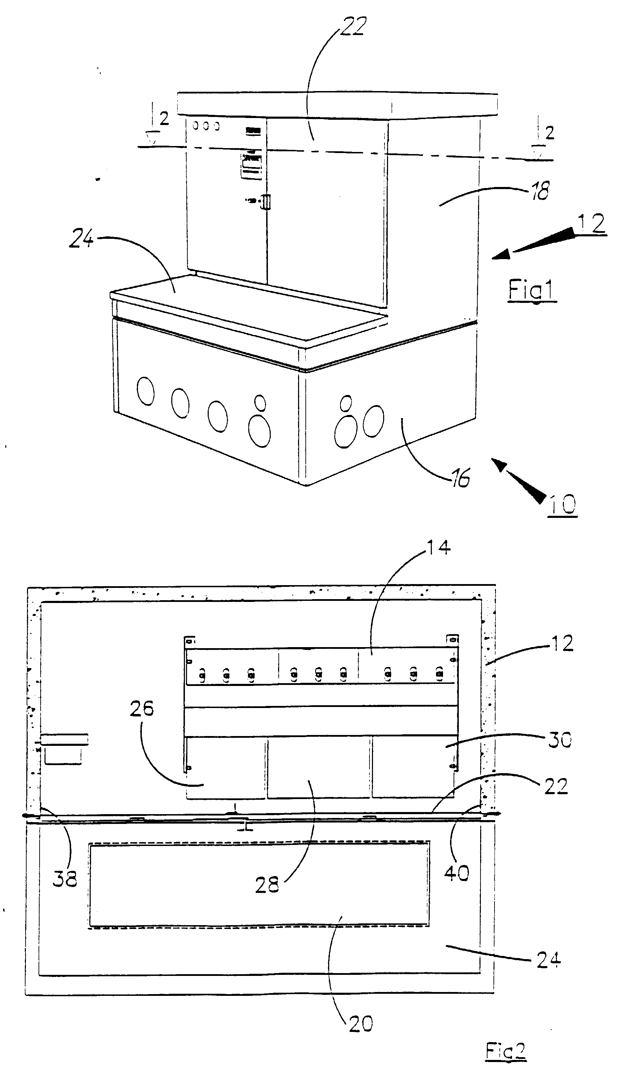

Sur les figures 1 et 2, un poste de distribution 10 électrique est logé dans une enveloppe 12 semi-enterrée en béton, laquelle renferme de l'appareillage électrique 14, notamment d'un tableau à haute tension, et d'un coffret à basse tension. L'enveloppe 12 est subdivisée en deux compartiments superposés comprenant un premier compartiment 16 enterré, et un deuxième compartiment 18 en élévation pour le logement de l'appareillage 14.

Le premier compartiment 16 sert de local ou vide technique pour l'emplacement et le raccordement des câbles d'entrée et de sortie de l'appareillage. Le fond du premier compartiment 16 comprend un trou 20 d'évacuation d'eau, et présente une section totale enterrée supérieure à la base du deuxième compartiment 18.

Le deuxième compartiment 18 est agencé au-dessus du niveau du sol, et comporte une porte 22 à double battant pour l'accès à l'appareillage 14.

Un trottoir 24 d'exploitation démontable se trouve légèrement en surélévation par rapport au niveau du sol, et permet de descendre dans ce premier compartiment 16. Le trottoir 24 horizontal s'étend perpendiculairement à la base de la porte 22, en recouvrant une partie du premier compartiment 16.

Sur la figure 2, l'appareillage 14 du tableau à haute tension comporte plusieurs cellules 26, 28, 30 juxtaposées selon une direction longitudinale parallèle à la porte 22. Un exemple de réalisation d'un tel tableau est décrit dans le brevet français n° 2.507.835 de la demanderesse. Les câbles à haute tension enterrés pénètrent dans le premier compartiment 16 par des orifices (non représentés). L'installation du poste et le raccordement des câbles avec les cellules 26, 28, 30 du tableau s'effectuent avec facilité après l'enlèvement du trottoir 24 d'exploitation.

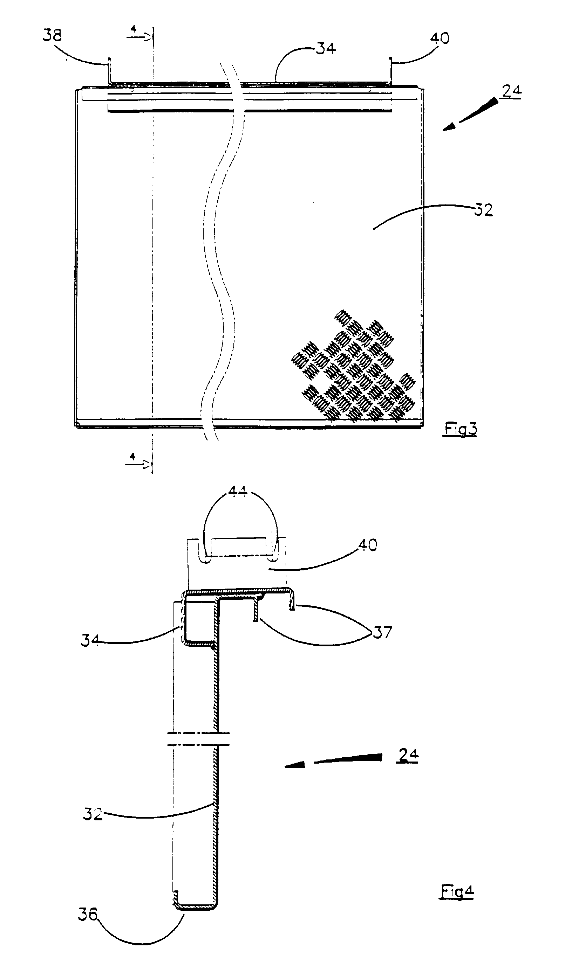

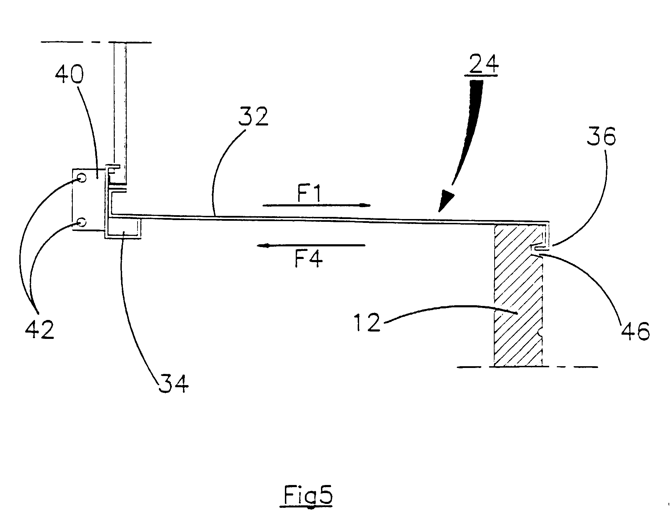

Le trottoir 24 représenté en détail aux figures 3 et 4, est formé par un plancher 32 en matériau métallique, auquel est associée une poutre de renfort 34. Le plancher 32 plein est d'un seul tenant, et comprend une tôle d'aluminium ou d'acier monobloc ayant une surface plane à reliefs, et une extrémité antérieure recourbée en U pour former un ergot de retenue 36. La poutre de renfort 34 est soudée à l'extrémité postérieure et à l'opposé de l'ergot de retenue 36 en étant équipée d'au moins une nervure 37 adaptée, à une bonne rigidité mécanique, et procurant en plus un degré d'étanchéité à la base de la porte 22.

Deux pattes de fixation 38, 40 de structures identiques sont assujetties symétriquement aux extrémités opposées de la poutre de renfort 34 pour venir en engagement avec les faces transversales opposées et internes de l'enveloppe 12 avec interposition de vis d'assemblage 42. Chaque patte de fixation 38, 40 s'étend perpendiculairement à la poutre 34, et comporte une paire de lumières 44 oblongues semi-ouvertes destinées à coopérer avec les vis 42.

L'ergot de retenue 36 s'engage lors de la mise en place du trottoir 24, dans une rainure 46 d'accrochage située dans la face antérieure externe du premier compartiment 16 de l'enveloppe 12 en béton.

La mise à la masse du trottoir 24 métallique s'opère au moyen d'un conducteur de terre (non représenté) connecté à une des nervures 37 de la poutre 34.

Le plancher 32 du trottoir 24 présente une légère pente en direction de l'ergot de retenue 36 pour empêcher tout écoulement d'eau vers la nervure d'étanchéité 37.

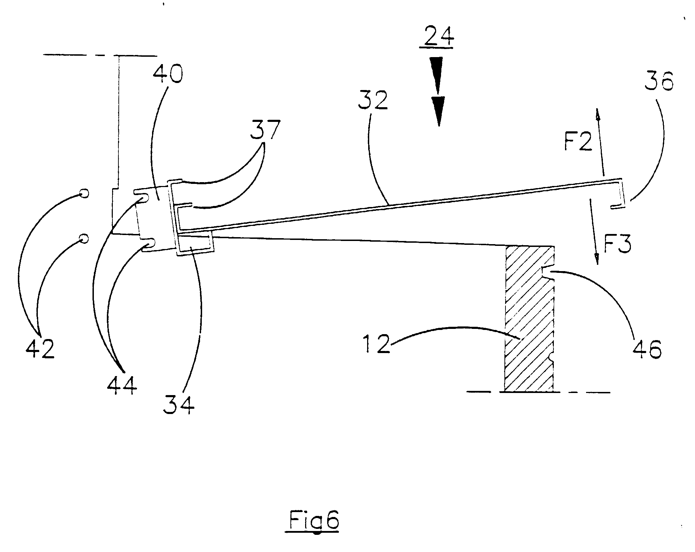

Les opérations de mise en place et d'enlèvement du trottoir 24 d'exploitation du poste de distribution 10 sont illustrées sur les figures 5 et 6.

Dans la position de la figure 5, les vis 42 solidarisent les deux pattes de fixation 38, 40 aux faces latérales internes de l'enveloppe 12, et l'ergot de retenue 36 est inséré dans la rainure d'accrochage 46. Le cadenassage de la porte 22 empêche tout accès aux vis de fixation 42, et le trottoir 24 se trouve verrouillé sur le premier compartiment 16. Tout mouvement de dégagement de l'ergot 36 hors de la rainure 46 est rendu impossible par la fixation des vis 42 du côté de la poutre 34.

Le démontage du trottoir 24, notamment pour des opérations de maintenance ou de raccordement, nécessite une ouverture préalable de la porte 22 pour desserrer les vis 42. Le déblocage des pattes de fixation 38, 40 permet ensuite un mouvement de retrait par translation du plancher 32 vers l'avant (sens de la flèche F1, figure 5). L'ergot de retenue 36 sort de la rainure 46, et il suffit ensuite de soulever le plancher 32 dans le sens de la flèche F2 (figure 6) pour dégager complètement l'accès au premier compartiment 16.

Après raccordement de l'armoire, la remise en place du trottoir 24 s'opère dans l'ordre inverse des opération décrites précédemment. Le trottoir 24 est posé tout d'abord sur le marchepied de l'armoire (flèche F3 sur figure 6), et il suffit ensuite de le pousser dans le sens de la flèche F4 (figure 5) jusqu'à la venue en butée de la poutre 34 contre l'enveloppe 12 en béton. Les lumières 44 des pattes de fixation 38, 40 s'engagent simultanément sur les vis 42, et l'ergot 36 pénètre dans la rainure d'accrochage 46. Le serrage des vis 42 suivi de la fermeture de la porte 22 assurent le verrouillage du trottoir 24.

La structure monobloc du trottoir 24 facilite les opérations de montage et de démontage. Le double verrouillage à l'avant et à l'arrière du plancher 32, après le serrage des vis 42 et la fermeture de la porte 22, rend impossible toute tentative d'enlèvement du trottoir 24.

Il est clair que le trottoir 24 métallique pourrait être remplacé par un trottoir en béton de résine. La poutre 34 serait alors rapportée par des moyens de fixation.

Le trottoir démontable selon l'invention, peut être utilisé dans tout autre poste électrique préfabriqué.

## Revendications

1. Poste électrique semi-enterré pour l'extérieur, ayant une enveloppe (12) en béton, subdivisée en un premier compartiment (16) enterré formant un vide technique, et un deuxième compartiment (18) en élévation superposé au dessus d'une partie du vide technique pour le logement de l'appareillage (14) électrique à haute tension et/ou à basse tension, l'autre partie du premier compartiment (16) étant recouverte par un trottoir (24) d'exploitation démontable se trouvant en légère surélévation par rapport au niveau du sol,
caractérisé en ce que
le trottoir (24) comporte un plancher (32) plein d'un seul tenant ayant une poutre de renfort (34) à l'extrémité postérieure, et un ergot de retenue (36) à l'extrémité opposée antérieure, que la poutre (34) est équipée de moyens de fixation (38, 40) coopérant avec des vis d'assemblage (42) pour créer un premier dispositif de verrouillage du trottoir à l'intérieur de l'enveloppe (12), et que l'ergot de retenue (36) s'engage dans une position active à l'intérieur d'une rainure (46) d'accrochage pour former un deuxième dispositif de verrouillage du trottoir (24) sur la face antérieure externe de l'enveloppe (12).

2. Poste électrique semi-enterré selon la revendication 1, caractérisé en ce que la poutre (34) de renfort s'étend parallèlement à la base d'une porte (22), laquelle autorise l'accès à l'appareillage (14), et au premier dispositif de verrouillage du trottoir (24).

3. Poste électrique semi-enterré selon la revendication 1 ou 2, caractérisé en ce que les moyens de fixation (38, 40) comportent deux pattes assujetties symétriquement aux extrémités opposées de la poutre (34) pour venir en engagement avec la paroi interne des faces transversales opposées de l'enveloppe (12) lorsque le premier dispositif de verrouillage est actif.

4. Poste électrique semi-enterré selon la revendication 3, caractérisé en ce que le premier dispositif de verrouillage du trottoir (24) est rendu actif par une action de serrage des pattes (38, 40) au moyen de vis d'assemblage (42) accessibles après ouverture de la porte (22).

5. Poste électrique semi-enterré selon l'une des revendications 1 à 4, caractérisé en ce que le deuxième dispositif de verrouillage est agencé pour être déplacé de la position active vers une position inactive suite au retrait du plancher après déblocage du premier dispositif de verrouillage.

6. Poste électrique semi-enterré selon la revendication 5, caractérisé en ce que le plancher (32) est formé par une tôle métallique ayant une structure à reliefs procurant un effet antidérapant, et que la poutre (34) est soudée à l'extrémité postérieure de la tôle, en étant équipée d'au moins une nervure (37) d'étanchéité.

7. Poste électrique semi-enterré selon la revendication 6, caractérisé en ce que le trottoir (24) métallique est mis à la masse au moyen d'un conducteur de terre.

8. Poste électrique semi-enterré selon la revendication 6, caractérisé en ce que le plancher (32) du trottoir (24) présente une légère pente en direction de l'ergot de retenue (36) pour s'opposer à tout écoulement d'eau vers la nervure d'étanchéité (37).

## Patentansprüche

1. Teilweise ins Erdreich versenkte Freiluft-Netzstation mit einem Betongehäuse (12), das in ein, als Kabelkeller ausgebildetes, versenktes erstes Abteil (16) sowie ein erhöhtes, über einem Teil des Kabelkellers angeordnetes zweites Abteil (18) zur Aufnahme der Hochspannungs- und/oder Niederspannungs-Schaltgeräte (14) unterteilt ist, wobei der verbleibende Teil des ersten Abteils (16) durch eine ausbaubare Bedienungsplattform (24) abgedeckt ist, die in geringer Höhe über dem umgebenden Erdreich angeordnet ist,
dadurch gekennzeichnet, daß die Bedienungsplattform (24) einen einstückigen Vollboden (32) mit einem an der hinteren Kante ausgebildeten Verstärkungsträger (34) sowie einer an der gegenüberliegenden vorderen Kante ausgebildeten Schubsicherung (36) umfaßt, daß der Träger (34) Befestigungsmittel (38, 40) aufweist, die zur Bildung einer ersten Verriegelungsvorrichtung der Bedienungsplattform im Innern des Gehäuses (12) mit Verbindungsschrauben (42) zusammenwirken, und daß die Schubsicherung (36) in einer aktiven Stellung zur Bildung einer zweiten Verriegelungsvorrichtung der Bedienungsplattform (24) an der vorderen Außenseite des Gehäuses (12) in eine Rastnut (46) eingreift.

2. Teilweise ins Erdreich versenkte Netzstation nach Anspruch 1, dadurch gekennzeichnet, daß der Verstärkungsträger (34) parallel zur Schwelle einer Tür (22) angeordnet ist, die den Zugang zu den Schaltgeräten (14) sowie zur ersten Verriegelungsvorrichtung der Bedienungsplattform (24) ermöglicht.

3. Teilweise ins Erdreich versenkte Netzstation nach Anspruch 1 oder 2, dadurch gekennzeichnet, daß die Befestigungsmittel (38, 40) zwei, an den einander gegenüberliegenden Enden des Trägers (34) symmetrisch angebrachte Laschen umfassen, die dazu dienen, gegen die Innenwand der einander gegenüberliegenden Querseiten des Gehäuses (12) geführt zu werden, wenn die erste Verriegelungsvorrichtung aktiv ist.

4. Teilweise ins Erdreich versenkte Netzstation nach Anspruch 3, dadurch gekennzeichnet, daß die erste Verriegelungsvorrichtung der Bedienungsplattform (24) durch Festziehen der Laschen (38, 40) mit Hilfe von, nach dem Öffnen der Tür (22) zugänglichen Befestigungsschrauben (42) aktiviert wird.

5. Teilweise ins Erdreich versenkte Netzstation nach einem der Ansprüche 1 bis 4, dadurch gekennzeichnet, daß die zweite Verriegelungsvorrichtung so ausgelegt ist, daß sie nach der Freigabe der ersten Verriegelungsvorrichtung und dem Zurückziehen des Bodens von der aktiven Stellung in eine unaktive Stellung verbracht werden kann.

6. Teilweise ins Erdreich versenkte Netzstation nach Anspruch 5, dadurch gekennzeichnet, daß der Boden (32) aus einem Blech mit einer Reliefoberfläche, die eine Anti-Rutschwirkung gewährleistet, besteht und der mindestens eine Dichtungsrippe (37) aufweisende Träger (34) an die hintere Kante des Blechs angeschweißt ist.

7. Teilweise ins Erdreich versenkte Netzstation nach Anspruch 6, dadurch gekennzeichnet, daß der Masseanschluß der metallischen Bedienungsplattform (24) mit Hilfe eines Erdungsleiters hergestellt wird.

8. Teilweise ins Erdreich versenkte Netzstation nach Anspruch 6, dadurch gekennzeichnet, daß der Boden (32) der Bedienungsplattform (24) ein leichtes Gefälle in Richtung der Schubsicherung (36) aufweist, um jegliches Abfließen von Wasser in Richtung der Dichtungsrippe (37) zu verhindern.

## Claims

1. A semi-underground electrical sub-station for outdoors, having a concrete enclosure (12) sub-divided into a first underground compartment (16) forming a technical space and a raised second compartment (18) superposed above a part of the technical space for housing the high voltage and/or low voltage electrical switchgear (14), the other part of the first compartment (16) being covered by a removable operations walkway (24) slightly raised with respect to ground level,
characterized in that
the walkway (24) comprises a solid floor (32) in a single piece having a reinforcement girder (34) at the rear end and a securing catch (36) at the opposite front end, that the girder (34) is equipped with fixing means (38, 40) cooperating with securing bolts (42) to create a first device for securing the walkway inside the enclosure (12), and that the securing catch (36) engages in an active position inside a retaining groove (46) to form a second device for securing the walkway (24) on the external front face of the enclosure (12).

2. The semi-underground electrical sub-station according to claim 1, characterized in that the reinforcement girder (34) extends parallel to the base of a door (22) which enables access to be had to the switchgear (14) and to the first device for securing the walkway (24).

3. The semi-underground electrical sub-station according to claim 1 or 2, characterized in that the fixing means (38, 40) comprise two fixing lugs symmetrically secured to the opposite ends of the girder (34) to come into engagement with the internal wall of the opposite side faces of the enclosure (12) when the first device for securing is active.

4. The semi-underground electrical sub-station according to claim 3, characterized in that the device for securing the walkway (24) is rendered active by a clamping action of the lugs (38, 40) by means of securing bolts (42) accessible after the door (22) has been opened.

5. The semi-underground electrical sub-station according to one of the claims 1 to 4, characterized in that the second device for securing is arranged to be moved from the active position to an inactive position after the floor has been removed after the first device for securing has been released.

6. The semi-underground electrical sub-station according to claim 5, characterized in that the floor (32) is formed by a metal plate having a structure with knobbles procuring an anti-slip effect, and that the girder (34) is welded to the rear end of the metal plate, being equipped with at least one sealing rib (37).

7. The semi-underground electrical sub-station according to claim 6, characterized in that the metal walkway (24) is earthed by means of an earthing conductor.

8. The semi-underground electrical sub-station according to claim 6, characterized in that the floor (32) of the walkway (24) presents a slight slope in the direction of the securing catch (36) to oppose any flow of water in the direction of the sealing rib (37).
